# EUROPEAN PATENT APPLICATION

(11) **EP 3 975 360 A1**
(43) Date of publication of application: **30.03.2022**
(21) Application number: 20198804.5
(22) Date of filing: 28.09.2020
(51) Int. Cl.: H02G 15/007

(54) **STRAIN-RELIEF ARRANGEMENT**

(71) Applicant: Danfoss A/S, 6430 Nordborg (DK)
(72) Inventor: Clausen, Anders Østergaard, 6430 Nordborg (DK)
(74) Representative: Keil & Schaafhausen Patentanwälte PartGmbB

(57) **Abstract**

A strain-relief arrangement (1) comprising a housing wall (2) having a first opening (6) and a fixing element (7) is described.

Such a strain-relief arrangement should reliably secure different sizes of cable-like elements.

To this end a fixing element (7) comprises a second opening (8) which is displaceable in relation to the first opening (6) in a direction parallel to a plane spanned by the first opening (6).

## Description

The present invention relates to a strain-relief arrangement comprising a housing wall having a first opening and a fixing element.

Such a strain-relief arrangement which can also be termed "pull-relief arrangement" is often used to fix a cable, a tube or another elongated and sufficiently ridged element to a housing. To this end the element is guided through the first opening. The fixing element is moved towards a counter element and the tube, pipe or other element is clamped between the fixing element and the counter element. In order to improve the holding characteristic, the fixing element and/or the counter element can be provided with a tooth geometry.

A strain-relief arrangement of the kind mentioned at the outset is known, for example, from GB 2 293 925 B.

Another strain-relief arrangement is known from DE 36 14 675 C2.

In GB 2 377 726 B the fixing element is flexible and forced in a direction towards the counter element by means of a screw.

All strain-relief arrangements can be used to fix a cable in a housing against pulling forces.

However, the known strain-relief arrangements are adapted to a single size of the cable to be fixed. Furthermore, the known strain-relief arrangements comprise lose parts which could be lost during installation.

The object underlying the invention is to provide a strain-relief arrangement which can reliably fix different sizes of cable-like elements.

This object is solved with a strain-relief arrangement as described at the outset in that the fixing element comprises a second opening which is displaceable in relation to the first opening in a direction parallel to a plane spanned by the first opening.

When such a strain-relief arrangement is used to fix a cable or another cable-like element, the cable is guided through the two openings. In a "neutral" position the first opening and the second opening overlap each other to an extent which is sufficient to guide the cable-like element through these two openings. Thereafter, the fixing element is displaced in a direction parallel to the plane spanned by the first opening. Since this plane is congruent with the housing wall, the fixing element is displaced parallel to the housing wall. The fixing element is moved like a "cigar cutter". The cable-like element is not only clamped between two parts, like the fixing element and a counter element, but it is slightly deformed in a S-shape so that an improved holding force is achieved. It is an advantage that different size cable-like elements can reliably fixed by the strain-relief arrangement.

In an embodiment of the invention the first opening comprises a first border section and the second opening comprises a second border section, wherein upon displacement of the fixing element relative to the housing wall a distance between the first border section and the second border section varies. When the strain-relief arrangement is operated to fix a cable-like element, the second border section and is moved relative to the first border section to decrease the distance. The cable-like element is loaded by the two border sections, however, the two border sections have a small distance relative to each other in the longitudinal direction of the cable-like element. The fixing element and the housing wall form a kind of scissors, however, without cutting the cable-like element.

In an embodiment of the invention the first opening and/or the second opening are closed openings. When the first opening is a closed opening, it is completely surrounded by the housing wall. When the second opening is a closed opening, it is completely surrounded by the fixing element.

In an embodiment of the invention the fixing element is guided in the housing wall. Thus, the path of displacement or movement of the fixing element is well defined and the fixing element cannot be displaced or moved out of the moving path.

In an embodiment of the invention the housing wall comprises a slot in which the fixing element is arranged. The slot is arranged in parallel to a plane spanned by the first opening and/or to a plane spanned by the second opening. This is a simple way to define the path of movement of the fixing element. The slot can be arranged in a housing wall, wherein the housing wall comprises a first section (which may be an inner section) and a second section (which may be an outer section), or it can be arranged between two housing walls.

In an embodiment of the invention the housing wall comprises an actuation side for the fixing element and the slot is open at a sight opposite to the actuation side. This facilitates the assembly of the housing wall and the fixing element. When the actuation side for the fixing element is located at the upper side of the housing wall, the slot is open at the lower side of the housing wall. In order to assemble the housing wall and the fixing element the fixing element is inserted into the slot from the bottom and fixed to the actuation side.

In an embodiment of the invention the fixing element is connected to a driving screw. When the driving screw is rotated, the fixing element is translated.

In an embodiment of the invention the driving screw is a captive screw. In other word, the screw cannot get lost. It is fixed in the housing wall.

In an embodiment of the invention the driving screw is arranged rotatably and axially fixed in the housing. Thus, the position of the driving screw does not change during actuation of the fixing element. When the screw is rotated, the fixing element is moved up and down along the screw. However, the screw remains in the initial position.

In an embodiment of the invention the driving screw ends inside the fixing element, wherein an end of the driving screw in the fixing element has a predetermined distance to the second opening. This predetermined distance can be chosen so that the cable-like element is not pressed onto the screw when the fixing element is moved. This reduces the risk of damages.

In an embodiment of the invention a sealing element is arranged between the fixing element and the housing. The sealing element can be used to reduce or prevent the entry of humidity into the housing. When the fixing element is moved in relation to the housing wall and thus the overlapping relation between the first opening and the second opening is changed, the cable-like element is pressed against the sealing.

In an embodiment of the invention the sealing element is attached to the fixing element. This simplifies the assembly of the strain-relief arrangement.

In an embodiment of the invention the sealing element is arranged on a side of the fixing element facing to an outer side of the housing wall. When the fixing element is arranged in a slot in the housing wall, the housing wall comprises an inner section and an outer section. The sealing is arranged between the fixing element and the outer section.

In an embodiment of the invention the sealing element comprises a third opening which is smaller than the second opening. The sealing element can be placed close to the cable-like element.

In an embodiment of the invention the housing wall comprises at least two first openings, wherein a fixing element is provided for each opening and the fixing elements of adjacent first openings are arranged offset to one another in a direction perpendicular to the housing wall. This construction allows for an arrangement of the first openings with small distances to each other. Although the first openings have only a small distance between each other, a sufficient number of fixing elements can be used.

A preferred embodiment of the invention will now be described with reference to the drawing in which:
- Fig. 1: shows a schematic sectional view of a strain-relief arrangement and
- Fig. 2: shows a housing and an arrangement of a plurality of cable-like elements.

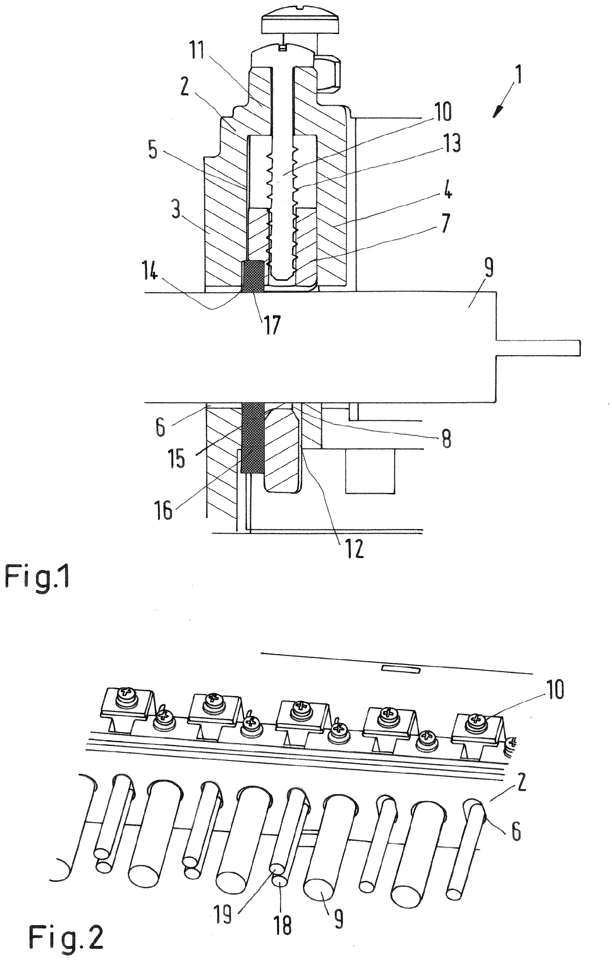

Fig. 1 schematically shows a strain-relief arrangement 1 which can also be termed "pull-relief arrangement". The strain-relief arrangement 1 comprises a housing wall 2 which may be an outer housing wall or any wall within a housing. The housing wall 2 comprises a first section which may be termed outer section 3 and a second section which may be termed inner section 4. A slot 5 is arranged between the outer section 3 and the inner section 4. The housing wall 2 comprises a first opening 6.

A fixing element 7 is arranged in the slot 5. The fixing element 7 comprises a second opening 8.

In a "neutral position", i.e. in a position in which a cable-like element 9 is inserted to be fixed, the first opening 6 and the second opening 8 overlap each other, so that the cable-like element 9 can be guided through the first opening 6 and the second opening 8.

The fixing element 7 can be arranged in the slot 5 in the housing wall 2 or in any other position in the housing, in particular mounted in a plane parallel with a housing wall. In another embodiment a slot 5 can be formed between two housing parts instead of two sections of the housing wall 2. A combination of fixing element 7 and housing wall 2 or any section 3, 4 of a housing wall 2 can be positioned in any position of the housing, in other words, it is not necessary that the housing wall forms an outer limit of the housing.

The fixing element 7 is connected to a driving screw 10. The driving screw 10 is a captive screw 10, i.e. it is mounted unreleasably in the wall 2, more precisely in a top part 11 of the wall 2.

The slot 5 is open at its lower end 12, i.e. at the end opposite the driving screw 10. When the fixing element 7 is mounted in the housing wall 2, it is inserted into the slot 5 from the lower side until it reaches the driving screw 10. Thereafter, the driving screw 10 is rotated. The driving screw 10 comprises a thread 13 changing the rotational movement of the driving screw 10 into a translating movement of the fixing element 7. The driving screw 10 is rotated until the second opening 8 overlaps the first opening 6.

When the cable-like element 9 has been guided through the first opening 6 and through the second opening 8, the fixing element 7 can be further moved by rotating the driving screw 10. The fixing element 7 displaces in the slot 5 parallel to the outer section 3 and the inner section 4 of the housing wall 2, so that the overlap between the first opening 6 and the second opening 8 decreases.

The first opening 6 is a closed opening, i.e. it is surrounded by the housing wall 2. The second opening 8 is likewise a closed opening, i.e. it is surrounded by the fixing element 7. However, this is not absolutely necessary. Both openings can be in form of partially open openings. It is only necessary that the first opening comprises a first border section 14 and the second opening 8 comprises a second border section 15, wherein upon displacement of the fixing element 7 relative to the housing wall 2 a distance between the first border section 14 and the second border section 15 varies. When the cable-like element 9 is fixed, this distance is reduced. At least one of the border sections 14, 15 can have a sharp edge to more easily penetrate into the cable-like element 9, in other words to have a scissor-like effect, however, without cutting the cable-like element 9.

When the cable-like element 9 is clamped between the first border section 14 and the second border section 15, it is held by a kind of scissors or by a "cigar cutter" causing s slight detonation of the cable-like element 9. In the embodiment shown, the cable-like element 9 shows two such deformations, namely one deformation between the fixing element 7 and the outer wall section 3 and a second deformation between the fixing element 7 and the inner section 4 of the housing wall 2. In this case the deformation is in form of a Ω. The fixing element 7 pulls a part of the cable-like element 9 into the slot 5. Although this deformation is not very substantive, it is sufficient to produce enough holding forces.

As can be seen in Fig. 1, the driving screw 10 ends in the fixing element 7 short before the second opening 8. When the fixing element 7 is moved upwards (the direction relates to the view shown in Fig. 1) the cable-like element 9 is likewise drawn upwards and can come into contact with the lower end of the driving screw 10. When the cable-like element 9 is pressed onto a driving screw 10, the holding force is even more increased.

A sealing element 16 is arranged between the fixing element 7 and the outer section 3 of the housing wall 2. The sealing element 16 comprises a third opening 17. The third opening 17 is slightly smaller than the second opening 8. When the cable-like element 9 is guided through the third opening 17 in the sealing element 16, the sealing element 16 tightly encloses the cable-like element 9.

When the fixing element 7 is actuated and is moved upwards, the sealing element 16 is pressed against the lower part of the cable-like element 9.

The sealing element 16 can be fixed to the fixing element 7. The sealing element 16 is fixed to the fixing element 7 before inserting the fixing element 7 into the slot 5. The sealing element 16 can be moulded on the fixing element with a two component moulding process.

Another possibility is to use a sealing element 16 which is fixed to the housing wall 2 or to use two sealing elements 16, one at the housing wall 2 and the other at the fixing element 7-

The fixing element 7 is arranged in extension of the driving screw 10.

As can be seen in Fig. 2, the housing wall 2 can comprise a large number of first openings 6. A driving screw 10 is associated to each first opening 6 showing that each of the first openings 6 is provided with a fixing element 7. However, the fixing elements 7 of adjacent first openings 6 are arranged in a staggered relation, i.e. they are arranged at different distances to the outer side of the housing wall 2.

Furthermore, Fig. 2 shows that different sizes of cable-like elements 9 can be fixed in the strain-relief arrangement 1. There are cable-like elements 9 having a large diameter and cable-like elements 9 having a much smaller diameter. It is also possible to fix two cable-like elements 18, 19 in a common first opening 6. In the embodiment shown in Fig. 2, the first openings for the small cable-like elements are longitudinal openings. However, the cable-like elements 18, 19 can be also fixed in the same way in an opening having a circular form.

In all cases the fixing element 7 draws the cable-like element 9; 18, 19 against the border section 14 of the housing wall 2 or against the two border sections of the outer wall section 3 and the inner wall section 4. In any case, a sufficient holding force is produced.

The fixing element 7 can have a thickness which is larger on the side of the second opening 8 adjacent the driving screw 10 (upper side in the drawing) than on the opposite side of the second opening 8 (lower side in the drawing). In this case the second section 4 of the housing wall 2 can have a step so that the slot 5 is larger on the upper side than on the lower side.

## Claims

1. Strain-relief arrangement (1) comprising a housing wall (2) having a first opening (6) and a fixing element (7), **characterized in that** the fixing element (7) comprises a second opening (8) which is displaceable in relation to the first opening (6) in a direction parallel to a plane spanned by the first opening (6).

2. Strain-relief arrangement according to claim 1, **characterized in that** the first opening (6) comprises a first border section (14) and the second opening (8) comprises a second border section (15), wherein upon displacement of the fixing element (7) relative to the housing wall (2) a distance between the first border section (14) and the second border section (15) varies.

3. Strain-relief arrangement according to claim 1 or 2, **characterized in that** the first opening (6) and/or the second opening (8) are closed openings.

4. Strain-relief arrangement according to any of claims 1 to 3, **characterized in that** the fixing element (7) is guided in the housing wall (2).

5. Strain-relief arrangement according to claim 4, **characterized in that** the housing wall (2) comprises a slot (5) in which the fixing element (7) is arranged.

6. Strain-relief arrangement according to claim 4 or 5, **characterized in that** the housing wall (2) comprises an actuation side for the fixing element (7) and the (5) slot is open at a side opposite to the actuation side.

7. Strain-relief arrangement according to any of claims 1 to 6, **characterized in that** the fixing element (7) is connected to a driving screw (10).

8. Strain-relief arrangement according to claim 7, **characterized in that** the driving screw (10) is a captive screw.

9. Strain-relief arrangement according to claim 7 or 8, **characterized in that** the driving screw (10) is arranged rotatably and axially fixed in the housing wall (2).

10. Strain-relief arrangement according to any of claims 7 to 9, **characterized in that** the driving screw (10) ends inside the fixing element (7) wherein an end of the driving screw (10) in the fixing element (7) has a predetermined distance to the second opening (8).

11. Strain-relief arrangement according to any of claims 1 to 10, **characterized in that** a sealing element (16) is arranged between the fixing element (7) and the housing wall (2).

12. Strain-relief arrangement according to claim 11, **characterized in that** the sealing element (16) is attached to the fixing element (7).

13. Strain-relief arrangement according to claim 11 or 12, **characterized in that** the sealing element (16) is arranged on a side of the fixing element (7) facing to an outer side of the housing wall (2).

14. Strain-relief arrangement according to any of claims 11 to 13, **characterized in that** the sealing element (16) comprises a third opening (17) which is smaller than the second opening (8).

15. Strain-relief arrangement according to any of claims 1 to 14, **characterized in that** the housing wall (2) comprises at least two first openings (6), wherein a fixing element (7) is provided for each first opening (6) and the fixing elements (7) of adjacent first openings (6) are arranged offset to one another in a direction perpendicular the housing wall (2).
